# DEMANDE DE BREVET EUROPEEN

(11) **EP 2 833 281 A1**
(43) Date de publication de la demande: **04.02.2015**
(21) Numéro de dépôt: 14178778.8
(22) Date de dépôt: 28.07.2014
(51) Int. Cl.: G06F 17/30

(54) **Deplacement des données d'une base de données relationnelle en fonction d'une analyse de l'activité de lecture et ecriture sur ces données**

(30) Priorité: 01.08.2013 FR 1357635
(71) Demandeur: BULL SAS, 78340 Les Clayes sous Bois (FR)
(72) Inventeur: Bouvet, Frédérique, 28700 La Tronche (FR); Buis, Martine, 38640 Claix (FR); Roy, Alexandra, 38640 Claix (FR); Empereur-Mot, Sylvie, 69270 Couzon (FR)
(74) Mandataire: Hirsch & Associés

(57) **Abrégé**

L'invention concerne un serveur de données (S) comportant un module d'administration (AM) d'une base de données relationnelle (DB) comportant un ensemble de tables et déployée sur au moins un disque dur (HDD). Le module dispose de
- moyens d'analyse consistant à déterminer pour chaque table, au moins une valeur représentative d'une quantité d'accès à cette table pendant une période prédéterminée,
- moyens de sélection d'une liste de tables, en fonction de cette/ces valeur(s) ;
- moyens de déplacement d'au moins certaines des tables de la liste depuis le disque dur vers une mémoire à accès rapide (FM), de façon transparente vis-à-vis de la structure de la base de données (DB)

## Description

### DOMAINE DE L'INVENTION

L'invention concerne le domaine général des bases de données relationnelles et plus particulièrement l'optimisation du déploiement d'une telle base sur un ou plusieurs serveurs de traitement de l'information.

L'invention s'applique particulièrement bien aux bases de données de la société Oracle.

### CONTEXTE DE L'INVENTION

Les bases de données relationnelles sont des structures de données organisées sous la forme de tables au sein desquelles les données sont indexées au moyen de clés.

Généralement, une base de données est associée à un système de gestion afin d'assurer une interface destinée aux utilisateurs de la base de données qui soit indépendante de la structure physique de celle-ci.

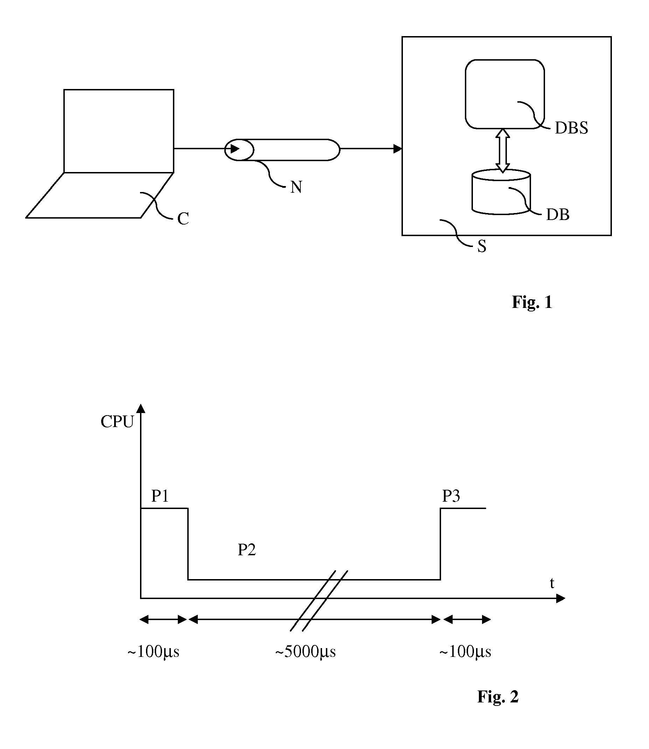

La figure 1 illustre une configuration typique selon laquelle un utilisateur U accède à la base de données DB au travers d'un client C installé sur un terminal de communication relié à un serveur distant S sur lequel est déployé le système de gestion DBS.

Le terminal de communication est typiquement un ordinateur ou n'importe quel dispositif, fixe ou mobile, permettant de déployer le client C et l'échange de données avec le serveur S via un réseau de communication N qui peut être filaire ou sans-fil.

Un produit bien connu tant pour la partie serveur S que pour la partie client C est le produit logiciel de la société Oracle.

La partie client C comprend principalement une interface permettant d'interroger la base de données via le langage d'interrogation structuré SQL. Ce langage SQL (pour « Structured Query Language » en langue anglaise) est normalisé à la fois par l'ISO (International Standards Organization) et l'ANSI (American National Standards Institute).

Ce langage SQL permet, au moyen d'un ensemble de commandes appelées « requêtes » de manipuler les données au sein de la base de données DB. Ces requêtes permettent d'effectuer notamment des recherches, d'ajouter des données, de mettre à jour ou modifier des données présentes, d'effacer des données, de créer ou de supprimer des tables, etc. Ce langage présente l'avantage d'offrir une interface universelle, de sorte que sa connaissance permet à un utilisateur d'interagir avec toutes sortes de bases de données.

La partie serveur S comprend la base de données physique DB et une instance d'un logiciel de gestion de la base de données (SGBD) DBS.

La base de données physique est une collection de fichiers informatiques stockés sur des disques durs (HDD pour *Hard Disk Drive* en langue anglaise) associés au serveur S et qui contiennent à la fois les données elles-mêmes mais aussi la structure interne de la base, conformément, notamment, aux spécifications du logiciel Oracle.

D'une façon générale, de nombreux clients peuvent communiquer avec un unique serveur S et interroger la base de données DB. Le serveur doit donc faire face à un grand nombre et parfois un très grande nombre de requêtes pouvant être simultanées ou non. Dans le cas de systèmes importants mettant en oeuvre un grand nombre de clients et une base de données DB de taille importante, il peut en résulter une performance insuffisante : les clients doivent attendre trop longtemps les réponses à leurs requêtes et le serveur S devient engorgé.

Les serveurs S mettent en oeuvre des microprocesseurs (CPU) de plus en plus puissants, mais toutefois, cette augmentation de la puissance de calcul ne suffit pas à résoudre le problème de performance des serveurs de base de données.

La figure 2 illustre schématiquement l'activité du microprocesseur (CPU) du serveur S, tel qu'il ressort d'analyses entreprises par la demanderesse. L'abscisse y représente le temps et l'ordonnée l'activité du microprocesseur CPU.

Une première phase P1, durant laquelle le microprocesseur est actif, consiste à traiter la requête entrante afin de préparer l'accès aux données stockées dans la base de données physique DB. Une seconde phase P2, durant lequel le microprocesseur est passif, consiste à effectuer cet accès et, pour le microprocesseur, à attendre le retour de l'accès. Une troisième phase P3, durant laquelle le microprocesseur est à nouveau actif, consiste à traiter le retour de l'accès.

Pour répondre aux requêtes entrantes, le système de gestion DBS effectue de très nombreux accès à la base de données physiques DB. On remarque que la phase P2 est plus longue que les phases P1 et P3 réunies d'un important facteur d'échelle (environ 5000 µs contre environ 2 fois 100 µs).

Il en découle que le noeud d'étranglement pour le serveur S est la phase P2 d'accès à la mémoire de masse (disques durs).

Le stockage est en effet le principal goulot d'étranglement de l'infrastructure. En effet, aujourd'hui un disque dur classique HDD ne peut pas fournir plus de 200 IO/s (entrées/sorties par secondes). De plus les disques HDDs ont des temps de latence beaucoup plus importants que ceux du processeur ou de la mémoire. Peu d'améliorations peuvent être apportées avec ces disques HDDs, car ils sont limités par la vitesse de rotation du disque (nombre de rotations par minute ou RPM) et par le temps nécessaire à la tête de lecture pour se placer à l'endroit de la donnée.

Par conséquent, on comprend, par cette analyse, que l'augmentation des performances des microprocesseurs ne résout que très partiellement ce problème technique.

Souhaitant améliorer davantage les performances générales du serveur S de données, l'homme du métier serait alors conduit à améliorer les performances de l'accès à la mémoire de masse et à la base de données physique DB.

Pour ce faire, une première solution peut consister à utiliser des disques durs plus performants, c'est-à-dire plus rapides et/ou avec des temps d'accès plus courts. Toutefois, une telle approche est limitée par les possibilités technologiques et le gain ne peut guère dépasser les 15 ou 20%. En outre, cette solution est coûteuse, du fait du prix des disques durs performants.

Une autre solution peut consister à augmenter le nombre de disques durs sur lequel la base de données physique DB est répartie. Ainsi, on peut répartir les accès sur plusieurs entités physiques et éviter les goulots d'étranglement sur un disque dur donné. Toutefois, cette solution implique une volumétrie importante, très nettement supérieure à celle nécessaire aux données de la base DB pour pouvoir générer un gain en performance significatif. Il en résulte que le coût par IOPS *(InputlOutput Per Second)* est très élevé (prix des disques durs, consommation électrique, surface occupée, coût de l'administration du système, etc.)

### RESUME DE L'INVENTION

Le but de la présente invention est de fournir une accélération des bases de données, notamment Oracle, en palliant au moins partiellement les inconvénients précités.

Plus concrètement, un aspect particulier de l'invention vise à fournir une interface graphique conviviale afin d'identifier facilement les objets de la base de données les plus fréquemment accédés et de pouvoir les déplacer dynamiquement vers des éléments de stockage physiques ou virtuels plus performants, de façon à accélérer les performances applicatives.....

A cette fin, la présente invention propose un procédé d'administration d'une base de données relationnelle comportant un ensemble de tables et déployée sur au moins un disque dur, et comportant :
- Une étape d'analyse consistant à déterminer pour chaque table dudit ensemble, au moins une valeur représentative d'une quantité d'accès à ladite table pendant une période prédéterminée,
- Une étape de sélection d'une liste de tables parmi ledit ensemble, en fonction desdites au moins une valeur
- Une étape de déplacement d'au moins certaines des tables de ladite liste depuis ledit au moins un disque dur vers une mémoire à accès rapide, de façon transparente vis-à-vis de la structure de ladite base de données.

Suivant des modes de réalisation préférés, l'invention comprend une ou plusieurs des caractéristiques suivantes qui peuvent être utilisées séparément ou en combinaison partielle entre elles ou en combinaison totale entre elles :
- pour chaque table, ladite au moins valeur est déterminée à partir de tables internes de ladite base de données relationnelle spécifiquement dédiés à des statistiques d'accès ;
- ladite mémoire à accès rapide est une mémoire flash, notamment de type SSD.
- ladite mémoire à accès rapide est un disque virtuel de type Ramdisk.
- on associe une zone de ladite mémoire à accès rapide à une zone de sauvegarde sécurisée sur ledit au moins un disque dur ;
- le procédé comporte en outre une étape de sélection d'une deuxième liste de tables parmi les tables précédemment déplacé dans ladite mémoire à accès rapide dudit ensemble, en fonction desdites au moins une valeur, et une étape de déplacement d'au moins certaines tables de ladite deuxième liste depuis ladite mémoire à accès rapide vers ledit au moins un disque dur, de façon transparente vis-à-vis de la structure de ladite base de données ;
- la base de données relationnelle est une base Oracle ;
- Le procédé comprend en outre une étape de déplacement d'au moins un espace « Tablespace » ;
- ladite liste est présentée à l'utilisateur via une interface homme-machine pour lui permettre de déterminer lesdites au moins certaines tables de ladite liste ;
- ladite étape de déplacement de façon transparente vis-à-vis de la structure de ladite base de données comprend la reconstruction des index associés auxdites au moins certaines tables sur ledit au moins un disque dur ;
- ladite étape de déplacement de façon transparente vis-à-vis de la structure de ladite base de données comprend le déplacement des index associés auxdites au moins certaines tables depuis ledit au moins un disque dur.

Un autre aspect de l'invention concerne un programme d'ordinateur comprenant des instructions qui, une fois chargées sur un système de traitement de l'information, sont aptes à mettre en oeuvre le procédé précédemment décrit.

Un autre aspect de l'invention concerne un serveur de données comportant un module d'administration d'une base de données relationnelle comportant un ensemble de tables et déployée sur au moins un disque dur, ledit module d'administration disposant de
- moyens d'analyse consistant à déterminer pour chaque table dudit ensemble, au moins une valeur représentative d'une quantité d'accès à ladite table pendant une période prédéterminée,
- moyens de sélection d'une liste de tables parmi ledit ensemble, en fonction desdites au moins une valeur
- moyens de déplacement d'au moins certaines des tables de ladite liste depuis ledit au moins un disque dur vers une mémoire à accès rapide, de façon transparente vis-à-vis de la structure de ladite base de données.

Un autre aspect de l'invention concerne un système composé d'un client et d'un serveur de données tel que précédemment décrit, connectés par un réseau de communication et dans lequel un module est prévu pour transmettre ladite liste audit client, et ledit client disposant d'une interface homme-machine pour présenter à l'utilisateur ladite liste et lui permettre de déterminer lesdites au moins certaines tables de ladite liste, et des moyens pour transmettre lesdites au moins certaines tables audit module d'administration.

Ladite interface homme-machine peut être une interface graphique.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement une architecture client/serveur mettant en oeuvre un système de gestion de base de données.
La figure 2 représente schématiquement l'activité du microprocesseur d'un serveur mettant en oeuvre un système de gestion de données, selon l'état de la technique.
La figure 3 représente schématiquement un exemple de déploiement d'un module d'administration au sein d'un système client/serveur, selon un mode de réalisation de l'invention.
La figure 4 représente une copie d'un des écrans de l'interface graphique, mettant en avant les tables de la base de données Oracle les plus sollicitées, selon un mode de réalisation de l'invention.

### DESCRIPTION DETAILLEE DE L'INVENTION

Le système selon l'invention est composé d'un client C et d'un serveur de données S.

Le client peut être un ordinateur ou tout autre terminal de communication (smartphone, assistant numérique, etc.). Il dispose de moyens pour établir une communication avec un serveur de données S via un réseau de communication N. Le réseau peut être un réseau local ou non ; il peut être filaire ou sans fil (3G, WLAN, Wifi...). D'une façon générale, une telle architecture est indépendante de la technologie sous-jacente.

Le client C dispose également des moyens logiciels pour permettre l'interaction avec un module d'administration AM située dans le serveur de données S et pour permettre l'interaction avec un utilisateur du client via une interface homme-machine dont le client C dispose. Cette interface homme-machine peut notamment être une interface graphique GUI (pour Graphical User Interface, en langue anglaise).

Selon un mode de réalisation, le client C met en oeuvre un système d'exploitation Windows™, commercialisé par la société Microsoft. Ce système d'exploitation dispose naturellement d'une interface homme-machine graphique. Les moyens logiciels peuvent alors être aisément développés comme une application Windows (par exemple, avec un outil de développement comme Visual Basic, etc.)

Une autre mise en oeuvre possible est de délocaliser les moyens logiciels en question hors du client C proprement dit. Les utilisateurs du client C y accède via l'interface homme-machine d'un navigateur web et les moyens logiciels sont mises en oeuvre comme une application web. L'application peut alors fonctionner totalement sur un serveur application (distinct du serveur de données S), ou sur le serveur de données S lui-même, ou bien elle peut être téléchargée sur le client C lorsque l'utilisateur y fait appel (comme une applet Java).

Quel que soit la mise en oeuvre, l'utilisateur peut accéder aux différentes fonctionnalités proposées par l'invention à travers cette interface homme-machine dont dispose le client C et les moyens logiciels associés.

Le serveur de données S comprend une base de données physique DBS et un système de gestion de base de données DBS. Ce serveur est un serveur fonctionnel : en d'autres termes, il peut être réparti sur plusieurs machines physiques ; la base de données physique DB et le système de gestion DBS peuvent notamment être mis en oeuvre sur des machines distinctes en pratique. Ces considérations de déploiement d'un système de base de données sont indépendantes de l'invention et ne seront donc pas développés davantage car accessibles à l'homme du métier.

La base de données DB est une base de données relationnelle. Selon un mode de réalisation préférentiel de l'invention, il s'agit d'une base Oracle.

Une base Oracle est un système complet fourni par la société Oracle comprenant à la fois un système de gestion de base de données DBS ainsi que l'architecture de la base de données physique DB. Cette architecture comprend le système de fichiers dans lequel sont stockés les données proprement dites, mais aussi des tables internes, ainsi que d'autres types de structures de données comme des espaces « Tablespace », des fichiers d'historiques «Logs ») etc.

La base de données physique DBS est principalement déployée sur un ou plusieurs disques durs HDD ou dispositifs de mémorisation équivalents. Les disques durs sont des mémoires de masse reposant sur un principe d'enregistrement électromagnétiques. Ils présentent l'avantage de pouvoir mémoriser des grands volumes de données, mais ont des vitesses d'accès relativement lentes.

Selon l'invention, la base de données physique DB comprend au moins un disque dur HDD et une mémoire à accès rapide FM.

Cette mémoire à accès rapide peut ne permettre le stockage que d'un volume relativement faible de données, mais possède une vitesse d'accès substantiellement plus grande que celle des disques durs HDD.

Cette mémoire à accès rapide FM peut être un espace de la mémoire vive du serveur de données S (ou RAM pour *Random-Access Memory* selon la terminologie en langue anglaise). Les temps d'accès à la RAM sont de l'ordre de 90ns par rapport à environ 3.5ms pour les disques durs classiques, soit un rapport d'environ 40000 fois).

Il peut alors s'agir d'un RAMdisk (ou RAM disque, en français), par exemple, c'est-à-dire d'un disque « virtuel » installé en mémoire vive.

Le protocole d'émulation d'un disque dur classique sur de la RAM, consomme des performances et empêche d'atteindre les performances citées préalablement, néanmoins un Ramdisk a un temps 1000 fois plus rapide et un débit d'environ 100 fois plus rapide qu'un disque classique

Une autre mise en oeuvre possible pour la mémoire à accès rapide FM peut être basée sur la technologie Flash. La mémoire flash est une mémoire de masse à semi-conducteurs réinscriptible, c'est-à-dire une mémoire possédant les caractéristiques d'une mémoire vive mais dont les données ne disparaissent pas lors d'une mise hors tension.

Il peut par exemple s'agir d'une mémoire SSD (pour « Solid State drive » en langue anglaise), qui est une architecture de mémoires basée sur la technologie Flash. Ce matériel est constitué de mémoires à semi-conducteurs à l'état solide par opposition aux disques durs classiques, sur lequel les données sont écrites sur un support magnétique en rotation rapide.

Les vitesses d'accès de telles mémoires SSD sont très supérieures à celles d'un disque dur : le temps d'accès est meilleur d'un facteur 100 à 150 et la vitesse de lecture et d'écriture est généralement supérieure à 5 fois celle pour un disque dur. Le temps d'accès est un facteur particulièrement important dans le cadre d'une base de données où l'on fait un grand nombre d'accès très courts (peu de données sont lues ou écrites à chaque fois).

D'une façon générale, la mémoire à accès rapide FM est basée sur une technologie différente que celle des disques durs HDD basés sur un support magnétique, qui permet ce gain substantiel de la vitesse d'accès. Cette technologie différente peut être le semi-conducteur mais d'autres mises en oeuvre pourraient être possibles.

Le module d'administration AM peut être mis en oeuvre de différentes façons au sein du serveur de données S. Dans le cadre d'une mise en oeuvre selon laquelle un système d'exploitation de type Unix ou AIX est déployé sur ce serveur S, il peut s'agir d'un agent développé en scripts shell. Il peut s'interfacer et être partiellement intégré au système de gestion DBS de la base de données via un ensemble de requêtes SQL et des programmes en langage PL/SQL (« *Procedural Language* / *Structure Query Language* »)*.* Ces programmes permettent de combiner une programmation procédurale avec des requêtes SQL visant la base de données DB.

Le module d'administration AM dispose de moyens pour mettre en oeuvre une étape de détermination, pour chaque table d'un ensemble de tables de la base de données DB, d'un ou plusieurs valeurs représentatives d'une quantité d'accès à cette table pendant une période déterminée.

Cet ensemble de tables peut ne représenter qu'une partie du contenu de la base de données DB. En effet, il peut être prévu qu'uniquement une partie de la base données DB est administrée selon l'invention. Dans la suite, uniquement l'ensemble des tables gérées sera considéré.

On détermine la ou les valeurs pendant une période déterminée qui peut être soit fixée à l'avance, soit déterminée par un utilisateur en fonction de sa connaissance métier du comportement de la base de données DB. Dans ce cas, cette période déterminée fait partie des paramètres de configuration auquel l'utilisateur peut avoir accès via l'interface homme machine déployée sur le client C. Il peut choisir une date de début et une date de fin d'une période, par exemple.

Selon un mode de réalisation de l'invention, deux « clichés » de statistiques relatives aux tables sont établis à deux instants formant extrémités de la période déterminée, et les valeurs d'accès aux tables sont déterminées à partir des valeurs de ces deux clichés.

Plus concrètement, dans le cadre d'une mise en oeuvre basée sur une base Oracle, on peut considérer des tables internes de la base de données spécifiquement dédiés à des statistiques d'accès. Ces tables peuvent par exemple être les tables
- DBA_HIST_SEG_STAT et
- DBA_HIST_SEG_OBJ

Ces tables contiennent des données statistiques sur l'accès aux éléments de la base de données DB à la fois sous une forme cumulative et sous une forme différentielle (« delta ») entre deux clichés.

Sur la base du contenu de ces tables prises aux deux instants bornant une période, il est donc possible de déterminer des valeurs représentatives de quantité d'accès pendant cette période. Ces valeurs peuvent être un nombre de lectures et d'écritures physiques par exemple, ou tout autre valeur qui forme une bonne métrique de l'utilisation des accès à une table sur le disque dur.

Ces valeurs sont étables pour chaque table, de sorte que le module d'administration est ensuite à même de sélectionner une liste de tables pertinente parmi l'ensemble de tables, sur la base des valeurs précédemment établies.

Cette liste peut être la liste ordonnée des tables pour lesquelles les valeurs correspondantes précédemment déterminées sont les plus élevées. Elle peut être formée de N tables correspondant aux N valeurs les plus élevés (avec N=10, par exemple), ou bien aux tables pour lesquelles les valeurs correspondantes dépassent un seuil prédéterminé. D'autres mises en oeuvre sont encore possibles.

Cette liste peut alors être présentée à l'utilisateur. Pour ce faire elle est transmise au client C qui peut l'afficher sur l'écran via l'interface homme-machine.

Parmi cette liste, l'utilisateur peut alors déterminer certaines tables (éventuellement toutes) pour déplacement depuis le disque dur HDD vers la mémoire à accès rapide FM.

Le module d'administration peut en outre fournir des informations supplémentaires pour aider et guider l'utilisateur dans cette détermination. Parmi ces informations, on peut citer bien sûr les valeurs relatives à la quantité d'accès elles-mêmes, mais aussi la taille que représentent physiquement les tables en mémoire.

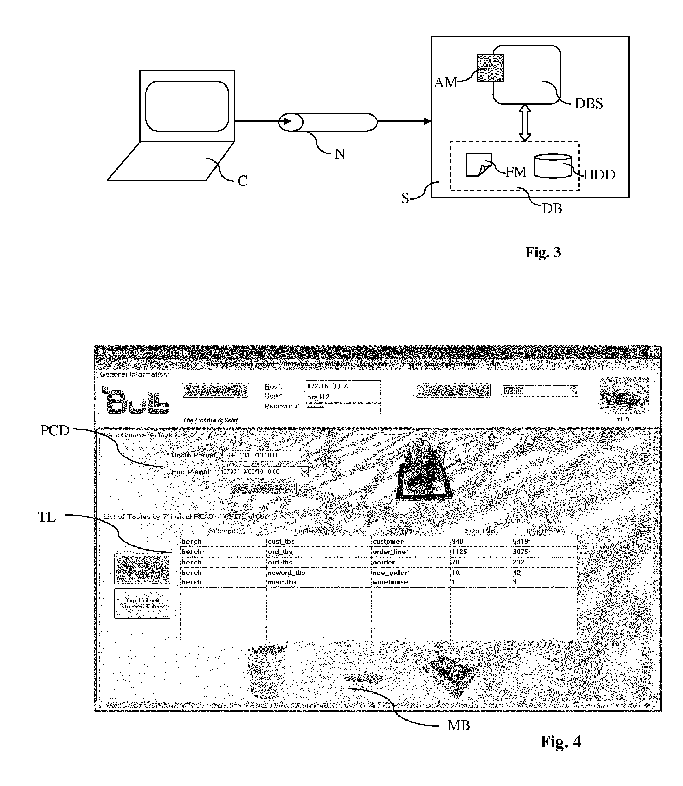

La figure 4 illustre une interface homme-machine possible tel qu'affichée sur le client C.

On peut voir dans la zone PCD les données de configuration de la période considérée, qui est ici déterminée par une date de début « Begin Period » et une date de fin « End Period ».

En dessous est affiché un tableau présentant la liste des tables TL préalablement sélectionnée.

Pour chaque table de cette liste est représentée le schéma, l'espace de tables « Tablespace », le nom de la table puis sa taille « Size » et une valeur représentative d'une quantité d'accès à la table, IO (R+W). Ici cette valeur cumule les lectures et les écritures concernant la table.

Le schéma et l'espace « tablespace » sont des entités relatives à l'architecture d'une base de données Oracle.

Un schéma regroupe les données (tables, mais aussi vues, index, procédures, dictionnaires, etc.) appartenant à un même « utilisateur fonctionnel ». En quelque sort, il s'agit d'une base de données logique, que l'on peut distinguer de la base de données physique DB : une même base de données physique DB peut héberger plusieurs bases de données logiques. Par exemple, une entreprise peut n'avoir qu'une seule base de données physiques DB qui héberge à la fois une base de données logique concernant les produits de la société, une seconde base de données logique concernant les salariés de la société, etc.

Un espace de type « tablespace » forme un niveau d'abstraction intermédiaire entre les tables (entité purement logique) et leur mémorisation concrète dans la base de données physique DB. Cette notion est particulièrement utile quand une base de données DB possède plusieurs disques durs afin de pouvoir plus aisément répartir les données sur ces différents disques durs HDD. Il est ainsi possible de créer un espace « tablespace » pour les données, un espace « tablespace » pour les indexes, etc. Oracle prévoit en outre des espaces « tablespace » spécifiques comme par exemples l'espace temporaire « Temporary tablespace », l'espace d'historique « Undo Tablespace », etc.

L'espace « Undo Tablespace » permet de faire machine-arrière en cas de besoin.

Toutes ces notions sont connues de l'homme du métier et sont plus précisément décrits dans les manuels d'utilisation des bases de données, par exemple dans ceux de la base Oracle.

Sur cette liste affichée, l'utilisateur peut déterminer au moins certaines des tables affichées, par exemple en cliquant dessus pour les sélectionner.

Une fois cette opération effectuée, il peut activer le bouton MB afin de déclencher le déplacement proprement dit des tables en question.

Ce déplacement est effectué pour chacune de ces tables depuis le ou les disques durs HDD vers la mémoire à accès rapide FM, de façon transparente vis-à-vis de la structure de la base de données DB.

Le déplacement effectif peut se faire en créant un nouvel espace « Tablespace » au sein de la mémoire à accès rapide FM puis à réaliser le déplacement de chaque table concernée par la commande Oracle « Alter table » et la clause « Move table ».

Afin que le déplacement soit effectué de façon transparente vis-à-vis de la structure de la base de données DB, certaines précautions doivent être mises en oeuvre. En effet, les mécanismes sous-jacents de la base de données Oracle ne prennent pas en compte la structure logique de la base de données en effectuant ce déplacement. Ainsi, notamment, les index associés à une table à déplacer ne sont pas pris en compte.

Aussi, l'invention propose d'en outre prendre en compte les index afin qu'une fois le déplacement effectivement effectuée, la base de données DB puisse continuer à être utilisée de la même façon qu'avant le déplacement par les utilisateurs.

Pour ce faire, selon un mode de réalisation de l'invention, le module d'administration AM propose à l'utilisateur via l'interface homme-machine déployée sur le client C de choisir une option parmi :
- Déplacer la table ainsi que l'index associé ;
- Déplacer la table et reconstruire un index sur l'ancien emplacement.

Selon la première option, une commande en langage SQL « Rebuild » peut être déclenchée par le module d'administration AM afin de reconstruire chaque index concerné, sur la mémoire à accès rapide FM.

Selon la seconde option, les anciens index sont supprimés et des nouveaux index sont recrées à leur emplacement actuel. Le stockage d'origine peut être retrouvé à partir d'une table interne associée au module d'administration AM qui conserve l'historique des déplacements.

Dans le cadre d'une mise en oeuvre selon laquelle la mémoire à accès rapide FM est un disque virtuel de type Ramdisk, le déplacement d'une table peut être mis en oeuvre selon un mode de réalisation avantageux de l'invention prenant en compte la persistance des données déplacées dans la mémoire à accès rapide FM.

Pour ce faire, on associe une zone de ladite mémoire à accès rapide FM (dans laquelle sont déplacées les tables) à une zone de sauvegarde (ou « backup ») sécurisée sur le ou les disques durs. Ces deux zones sont automatiquement synchronisées de sorte qu'une modification d'une table dans la mémoire à accès rapide FM se répercute dans la zone de sauvegarde.

Cette mise en oeuvre est particulièrement utile avec une base Oracle. En effet, un disque virtuel « Ramdisk » est considéré par la base Oracle comme un disque « normal » (c'est-à-dire une mémoire de masse) et donc implicitement persistant. Autrement dit, Oracle ne met en oeuvre aucun mécanisme pour permettre de récupérer les données en cas d'accidents (« crash ») vidant la mémoire vive du serveur S.

Le module d'administration AM peut prévoir un ensemble de mesures pour permettre la persistance des données.

Selon un mode de réalisation, ces mesures comprennent :
- Création d'un disque virtuel Ramdisk au niveau système.
- Paramétrage de la base Oracle en mode « Archive Log »
- Création d'un espace « Tablespace » sur le disque virtuel
- Création d'un espace « Backup tablespace » dans les fichiers « archive logs » courants ;

Une fois ces précautions mises en place, les tables peuvent être déplacées depuis le (ou les) disques durs HDD.

En cas d'accident impactant le contenu de la mémoire vive du serveur S (ou plus précisément, des machines physiques mettant en oeuvre le serveur fonctionnel S), la récupération peut se faire par l'outil RMAN de la société Oracle. Cet outil est un outil de récupération (RMAN pour « Recovery Manager », en langue anglaise) permettant la sauvegarde (« backup ») des bases de données et leur récupération.

Le module d'administration AM peut récréer le disque virtuel Ramdisk, puis alors utiliser l'outil RMAN pour démarrer la base et restaurer l'espace « Tablespace » sur le disque virtuel à partir de la version sauvegardée.

Selon un mode de réalisation de l'invention, comme il a été précédemment évoqué, une table (au moins) est associée au module d'administration afin de mémoriser les déplacements des tables. Cette table peut permettre de proposer à l'utilisateur de « défaire » (« undo ») une action de déplacement, ou bien simplement d'afficher les actions précédentes pour information.

Selon un mode de réalisation de l'invention, il peut être proposé à l'utilisateur d'effectuer des déplacements sur des espaces « tablespace ». Ces déplacements peuvent être proposés en addition des tables et peuvent concerner des espaces « tablespace » particulier d'une base Oracle. Il peut notamment s'agir des espaces :
- « temporary tablespace »
- « undo tablespace »
- « redo logs ».

Comme pour les tables, ces espaces peuvent être proposés à l'utilisateur pour déplacement via un affichage sur l'interface homme machine du client C, avec des informations supplémentaires comme, notamment, leur taille physique.

Également, selon un mode de réalisation de l'invention, il peut être proposé le déplacement inverse, c'est-à-dire depuis la mémoire à accès rapide FM vers le ou les disques durs HDD.

Pour ce faire, il est mis en oeuvre :
- Une étape de sélection d'une deuxième liste de tables parmi les tables précédemment déplacées dans ladite mémoire à accès rapide, en fonction des au moins une valeur déterminées préalablement,
- Une étape de déplacement d'au moins certaines de ces tables de depuis la mémoire à accès rapide vers le ou disques durs, de façon transparente vis-à-vis de la structure de ladite base de données.

Les mécanismes sous-jacents sont similaires à ceux préalablement décrits pour la direction HDD vers FM.

Toutefois, il s'agit ici de sélectionner dans la deuxième liste les tables pour lesquels la valeur représentative d'une quantité d'accès est minimale. De la même façon que précédemment, il peut s'agir de sélectionner les N tables les moins actives parmi celles présentes dans la mémoire à accès rapide ; ou bien celles qui ont une activité mesurée inférieure à un seuil donné, par exemples.

Ainsi, le module d'administration AM fournit une aide à la décision permettant d'adapter la répartition des données de la base de données DB sur deux types de support physique en fonction des activités de lecture/écriture sur les tables de la base. Il permet ainsi de profiter de façon optimale des caractéristiques de chaque type de support et de réduire considérablement les temps de latence inhérents à la mémoire de masse pour les tables les plus utilisées.

Il peut aussi laisser à l'utilisateur la possibilité d'adapter la répartition en fonction de sa connaissance métier, mais des mises en oeuvre automatiques sont également possibles.

Il permet aussi de gérer la persistance des données y compris dans le cas où la mémoire à accès rapide est une mémoire de type RAM.

Le déplacement des données, la persistance etc. sont gérés par le module d'administration de façon aussi transparente que possible pour l'utilisateur, de sorte que les risques d'erreurs et d'oublis sont réduits au minimum.

Bien entendu, la présente invention n'est pas limitée aux exemples et au mode de réalisation décrits et représentés, mais elle est susceptible de nombreuses variantes accessibles à l'homme de l'art.

## Revendications

1. Procédé d'administration d'une base de données relationnelle (DB) comportant un ensemble de tables et déployée sur au moins un disque dur (HDD), et comportant
- Une étape d'analyse consistant à déterminer pour chaque table dudit ensemble, au moins une valeur représentative d'une quantité d'accès à ladite table pendant une période prédéterminée,
- Une étape de sélection d'une liste de tables parmi ledit ensemble, en fonction desdites au moins une valeur
- Une étape de déplacement d'au moins certaines des tables de ladite liste depuis ledit au moins un disque dur vers une mémoire à accès rapide (FM), de façon transparente vis-à-vis de la structure de ladite base de données (DB)

2. Procédé d'administration selon la revendication précédente, dans lequel pour chaque table, ladite au moins valeur est déterminée à partir de tables internes de ladite base de données relationnelle (DB) spécifiquement dédiés à des statistiques d'accès.

3. Procédé d'administration selon l'une des revendications 1 ou 2, dans lequel ladite mémoire à accès rapide est une mémoire flash, notamment de type SSD.

4. Procédé d'administration selon l'une des revendications 1 ou 2, dans lequel ladite mémoire à accès rapide est un disque virtuel de type Ramdisk.

5. Procédé d'administration selon l'une des revendications précédentes dans lequel on associe une zone de ladite mémoire à accès rapide (FM) à une zone de sauvegarde sécurisée sur ledit au moins un disque dur.

6. Procédé d'administration selon l'une des revendications précédentes, comportant en outre :
- Une étape de sélection d'une deuxième liste de tables parmi les tables précédemment déplacé dans ladite mémoire à accès rapide dudit ensemble, en fonction desdites au moins une valeur,
- Une étape de déplacement d'au moins certaines tables de ladite deuxième liste depuis ladite mémoire à accès rapide vers ledit au moins un disque dur, de façon transparente vis-à-vis de la structure de ladite base de données (DB)

7. Procédé d'administration selon l'une des revendications précédentes dans lequel ladite base de données relationnelle (DB) est une base Oracle.

8. Procédé d'administration selon la revendication précédente, comportant en outre une étape de déplacement d'au moins un espace « Tablespace ».

9. Procédé d'administration selon l'une des revendications précédentes, dans lequel ladite liste est présentée à l'utilisateur via une interface homme-machine pour lui permettre de déterminer lesdites au moins certaines tables de ladite liste.

10. Procédé d'administration selon l'une des revendications précédentes, dans lequel ladite étape de déplacement de façon transparente vis-à-vis de la structure de ladite base de données comprend la reconstruction des index associés auxdites au moins certaines tables sur ledit au moins un disque dur.

11. Procédé d'administration selon l'une des revendications 1 à 9, dans lequel ladite étape de déplacement de façon transparente vis-à-vis de la structure de ladite base de données comprend le déplacement des index associés auxdites au moins certaines tables depuis ledit au moins un disque dur.

12. Programme d'ordinateur comprenant des instructions qui, une fois chargées sur un système de traitement de l'information, sont aptes à mettre en oeuvre le procédé selon l'une des revendications précédentes.

13. Serveur de données (S) comportant un module d'administration (AM) d'une base de données relationnelle (DB) comportant un ensemble de tables et déployée sur au moins un disque dur (HDD), ledit module d'administration disposant de
- moyens d'analyse consistant à déterminer pour chaque table dudit ensemble, au moins une valeur représentative d'une quantité d'accès à ladite table pendant une période prédéterminée,
- moyens de sélection d'une liste de tables parmi ledit ensemble, en fonction desdites au moins une valeur
- moyens de déplacement d'au moins certaines des tables de ladite liste depuis ledit au moins un disque dur vers une mémoire à accès rapide (FM), de façon transparente vis-à-vis de la structure de ladite base de données (DB)

14. Système composé d'un client (C) et d'un serveur de données (S) selon la revendication 13, connectés par un réseau de communication (N) et dans lequel un module (AM) est prévu pour transmettre ladite liste audit client, et ledit client disposant d'une interface homme-machine pour présenter à l'utilisateur ladite liste et lui permettre de déterminer lesdites au moins certaines tables de ladite liste, et des moyens pour transmettre lesdites au moins certaines tables audit module d'administration.

15. Système selon la revendication précédente, dans lequel ladite interface homme-machine est une interface graphique.
